# EUROPÄISCHE PATENTSCHRIFT

(11) **EP 1 597 471 B1**
(45) Veröffentlichungstag und Bekanntmachung des Hinweises auf die Patenterteilung: **03.01.2007**
(21) Anmeldenummer: 04711575.3
(22) Anmeldetag: 17.02.2004
(51) Int. Cl.: F02F 3/00, F16J 1/00

(54) **MEHRTEILIGER KOLBEN**
MULITPART PISTON
PISTON CONSTITUE DE PLUSIEURS PARTIES

(30) Priorität: 19.02.2003 DE 10307908
(43) Veröffentlichungstag der Anmeldung: 23.11.2005
(73) Patentinhaber: Mozzi, Andreas, 73033 Göppingen (DE)
(72) Erfinder: Mozzi, Andreas, 73033 Göppingen (DE)
(74) Vertreter: Patentanwälte Ruff, Wilhelm, Beier, Dauster & Partner
(86) Internationale Anmeldenummer: PCT/EP2004/001455
(87) Internationale Veröffentlichungsnummer: WO 2004/074668

(56) Entgegenhaltungen:
- DE-A- 10 025 132
- DE-C- 10 042 422
- DE-C- 19 526 449
- US-A- 1 904 305
- US-A- 2 198 689
- US-A- 3 221 722
- US-A- 4 459 900
- US-A- 4 741 253
- US-A- 5 499 572

## Beschreibung

Die Erfindung betrifft einen mehrteiligen Kolben, insbesondere für Verbrennungskraftmaschinen, mit einem Unterteil und einem Oberteil, wobei das Unterteil ein Kolbenhemd mit einer Umfangslauffläche sowie einen sich vom Umfang aus nach innen erstreckenden Ringabschnitt einer Stirnfläche eines Kolbenbodens bildet und wobei das Oberteil die übrige Stirnfläche des Kolbenbodens bildet, wobei das Oberteil wenigstens im Bereich der Stirnfläche des Kolbenbodens mittels einer Presspassung mit dem Unterteil verbunden ist und das Unterteil hohlzylindrisch ausgebildet ist.

Aus der deutschen Patentschrift DE 100 42 422 C1 ist ein Kolben mit einem Unterteil und einem Oberteil bekannt, bei dem das Kolbenhemd die vollständige Umfangslauffläche des Kolbens bildet. Das Unterteil weist weiterhin einen sich vom Umfang aus nach innen erstreckenden Ringabschnitt einer Stirnfläche eines Kolbenbodens auf. Die übrige Stirnfläche des Kolbenbodens wird durch ein Oberteil gebildet, das in das Unterteil eingesetzt ist. Das Oberteil liegt über eine kegelstumpfförmige Fläche in einer ebenfalls kegelstumpfförmigen Einsenkung des Unterteils an und wird durch eine Blattfeder gegen das Unterteil vorgespannt. Auf diese Weise kann sich das Oberteil bei thermischer Ausdehnung gegenüber dem Unterteil geringfügig verschieben.

Aus der deutschen Offenlegungsschrift DE 101 16 084 A1 ist ein weiterer mehrteiliger Kolben bekannt. Ein Kolbenoberteil bildet dort die vollständige Stirnfläche eines Kolbenbodens und weist eine kegelstumpfförmige Anlagefläche auf, mit der das Oberteil in das Unterteil eingepasst ist. Die kegelstumpfförmige Einsenkung im Unterteil zur Aufnahme des Oberteils erstreckt sich bis zum Umfang des Kolbens. Das Oberteil ist über eine Blattfeder gegen das Unterteil vorgespannt.

Aus der amerikanischen Patentschrift 1,357,851 ist ein zweiteiliger Kolben für einen Verbrennungsmotor bekannt. Ein Kolbenoberteil ist dort für die Aufnahme mehrerer Kolbenringe vorgesehen und bildet demzufolge einen Teil der Umfangsfläche des Kolbens. Das Oberteil ist in ein Unterteil des Kolbens eingeschraubt. Um einen engen Sitz des Gewindes sicherzustellen, ist vorgesehen, das Unterteil vor dem Einschrauben des Oberteils zu erhitzen, um dann beim Abkühlen einen engen Sitz zwischen den Gewindeabschnitten zu erreichen. Eine Verdrehsicherung des Oberteils gegenüber dem Unterteil wird dadurch sichergestellt, dass ein Kolbenbolzen sich sowohl durch das Oberteil als auch das Unterteil erstreckt.

Aus der amerikanischen Patentschrift 1,812,391 ist ein weiterer zweiteiliger Kolben bekannt. Das einen Kolbenboden bildende Oberteil und das ein Kolbenhemd bildende Unterteil des Kolbens weisen zueinander passende Gewindeabschnitte auf. Zur Befestigung wird das Oberteil in das Unterteil eingeschraubt. Das Oberteil ist mittels zweier Zugfedern in Einschraubrichtung gegen das Unterteil vorgespannt.

Aus der deutschen Patentschrift DE 32 48 925 C2 ist ein zweiteiliger Kolben bekannt, der im Bereich der Stirnfläche mit einem Einsatz versehen ist. Der Einsatz erstreckt sich in das Kolbenunterteil hinein und weist zwei gegenüberliegende, den Kolbenbolzen umgreifende Augen auf. Ausgehend von der Stirnfläche ist der Einsatz mittels einer ringförmigen Nut vom Kolbenunterteil, das die übrige Stirnfläche bildet, getrennt. Dadurch soll der Wärmeübergang im Bereich der Stirnfläche verringert werden. Beabstandet von der Stirnfläche und etwa auf Höhe der Kolbenringnuten ist der Einsatz mittels eines Presssitzes am Unterteil gesichert.

Aus der deutschen Offenlegungsschrift DE 25 58 761 A1 ist ein zweiteiliger Kolben mit einem tassenförmigen Einsatz in der Stirnfläche bekannt. Der tassenförmige Einsatz wird in eine ebenfalls tassenförmige Mulde eines Kolbenunterteils mittels Presssitz gesichert.

Aus der US-Patentschrift US 1 904 305 A ist ein Kolben für einen Verbrennungsmotor bekannt, der aus wenigstens einem Oberteil und einem Unterteil besteht, wobei das Unterteil ein hohlzylindrisches und ringförmiges Kolbenhemd bildet und zusammen mit dem darin mittels Presspassung eingebrachten Oberteil eine geschlossene Stirnseite des Kolbens darstellt.

In der US-Patentschrift US 3 221 722 A ist ein Kolben beschrieben, der aus einem Kolbenunterteil und einem Einsatz besteht. Der Einsatz ist mittels eines Außengewindes und einem Innengewinde in einer Aussparung des Kolbenunterteils befestigt und gesichert.

Die US-Patentschrift US 5 499 572 beschreibt einen mehrteiligen Kolben, bestehend aus einem tellerartigen Teil, über dessen Oberfläche die Zündung des Kraftstoffs stattfindet, und einem ringförmigen Teil, das die durch die Zündung entstehende Kraft auf den tellerartigen Teil weiterleitet und einem Kolbenhemd entspricht. Der tellerartige Teil ist über den ringförmigen Teil gestülpt, so dass vom ringförmigen Teil kein Abschnitt Teil der Stirnfläche ist.

Die deutsche Patentschrift DE 195 26 449 C1 beschreibt einen geteilten Kolben, bestehend aus wenigstens einem Innenkolben und einem Außenkolben, die mittels eines Bajonettverschlusses miteinander verbunden sind.

Ein Kolben und ein Verfahren zur Herstellung eines Kolbens für eine Verbrennungskraftmaschine sind in der deutschen Offenlegungsschrift DE 100 25 132 A1 beschrieben. Dieser Kolben aus wenigstens zwei Bereichen ist aus einer Titan-Aluminium-Legierung hergestellt. Die zwei Bereiche bestehen aus im Mischungsverhältnis verschiedenen Legierungen dieser Art.

Die US-Patentschrift US 2 198 689 beschreibt einen Kolben und eine Methode um diesen herzustellen. Ein als Hohlzylinder ausgebildetes Kolbenhemd umschließt einen Kolbeneinsatz. Sie bilden gemeinsam eine Stirnfläche und sind mittels einer Presspassung verbunden.

Gegenstand der US-Patentschrift US 4 459 900 ist ein Zusammenbau eines wärmegedämmten Kolbens und die Methode des Zusammenbaus dieses Kolbens. In einer hohlzylindrischen Hülse ist ein hitzebeständiger Kern untergebracht und durch eine Presspassung fixiert. Sie bilden eine gemeinsame Stirnfläche.

In der US-Patentschrift US 4 741 253 ist ein Kolben für einen Verbrennungsmotor beschrieben. Dieser besteht aus einem ringförmigen Hauptkörper und einem Unterteil, der in eine Tasche des Hauptkörpers eingelegt wird. Gegen das Herausfallen des Unterteils aus dem Hauptkörper sichert ein Haltering.

Mit der Erfindung soll ein auch für höchste Drehzahlen und einen weiten Temperaturbereich geeigneter mehrteiliger Kolben geschaffen werden.

Erfindungsgemäß ist hierzu ein mehrteiliger Kolben, insbesondere für Verbrennungskraftmaschinen, mit einem Unterteil und einem Oberteil, wobei das Unterteil ein Kolbenhemd mit einer Umfangslauffläche sowie einen sich vom Umfang aus nach innen erstreckenden Ringabschnitt einer Stirnfläche eines Kolbenbodens bildet und wobei das Oberteil die übrige Stirnfläche des Kolbenbodens bildet, wobei das Oberteil wenigstens im Bereich der Stirnfläche des Kolbenbodens mittels einer Presspassung mit dem Unterteil verbunden ist und das Unterteil hohlzylindrisch ausgebildet ist, wobei das Oberteil und das Unterteil zueinander passende Gewindeabschnitte im Abstand von den die Presspassung realisierenden Abschnitten tragen und miteinander verschraubt sind, wobei das Oberteil einen scheibenartigen Abschnitt aufweist, der abschnittsweise die Stirnfläche des Kolbens bildet, und der Gewindeabschnitt des Oberteils an einem zylindrischen, von dem scheibenartigen Abschnitt ausgehenden Fortsatz ausgebildet ist, wobei der Gewindeabschnitt vom Übergang des Fortsatzes in den scheibenartigen Abschnitt beabstandet ist und wobei das Unterteil das Oberteil im Bereich zwischen dem Übergang und dem Gewindeabschnitt nicht kontaktiert.

Durch Vorsehen einer Presspassung im Bereich der Stirnfläche des Kolbenbodens zwischen Oberteil und Unterteil wird zum einen das Oberteil sicher am Unterteil gehalten. Zum anderen sind Unterteil und Oberteil im Bereich der, einem Brennraum zugewandten Stirnfläche des Kolbenbodens zuverlässig abgedichtet. Auf diese Weise ist der erfindungsgemäße Kolben für höchste Drehzahlen und einen weiten Temperaturbereich geeignet und im Bereich der Stirnfläche des Kolbenbodens treten keine Spalte auf, in denen sich Rückstände ablagern können oder die eine unvollständige Verbrennung begünstigen könnten. Der Presssitz zwischen Oberteil und Unterteil ist zweckmäßigerweise so bemessen, dass dieser im vollständigen Betriebstemperaturbereich des Kolbens aufrechterhalten bleibt. Das Vorsehen eines vom Unterteil getrennten Oberteils führt zu einem gegenüber einteiligen Kolben erheblich verringerten Wärmeübergang von der dem Brennraum zugewandten Stirnfläche des Kolbenbodens auf die Umfangslauffläche des Kolbens. Infolgedessen bleibt die Umfangslauffläche des Kolbens kühler, so dass die Gefahr, dass ein Schmierfilm zwischen Kolben und Zylinder reißt, wesentlich verringert ist. Dies ist insbesondere bei Zweitaktmotoren von erheblichem Vorteil, da ein Ölanteil im Kraftstoffgemisch erheblich verringert werden kann. Durch den wesentlich verringerten Ölanteil im Kraftstoffgemisch werden zum einen Treibstoffkosten gespart und zum anderen wird die Abgasqualität erheblich verbessert. Aufgrund des geringeren Ölanteils können damit auch bei Zweitaktmotoren Katalysatoren eingesetzt werden, um die Abgasqualität weiter zu verbessern. Da das Unterteil die vollständige Umfangslauffläche bildet, kann die Umfangslauffläche in konventioneller Weise bearbeitet werden und eventuell vorgesehene Kolbenringe können dicht an der Stirnfläche des Kolbens angeordnet werden. Der Radius des Oberteils an der Stirnfläche beträgt vorteilhafterweise mindestens 4/5 des Radius der Umfangslauffläche. Allgemein soll der vom Kolbenoberteil eingenommene Anteil der Stirnfläche möglichst groß sein, um eine starke Erwärmung der Umfangslauffläche zu verhindern.

Durch die hohlzylindrische Ausbildung des Unterteils des Kolbens in Verbindung mit dem Presssitz zwischen Oberteil und Unterteil im Bereich der Stirnfläche wird eine Verformung des Kolbens in radialer Richtung bei Erwärmung im wesentlichen durch die thermische Ausdehnung des Kolbenoberteils im Bereich der Stirnfläche bestimmt, da das Kolbenunterteil im Vergleich zu herkömmlichen Kolben deutlich weniger stark erwärmt wird. Wird für das Kolbenoberteil ein Material mit geringem Wärmeausdehnungskoeffizienten gewählt, ist es möglich, die radiale Verformung des Kolbenunterteils bei Erwärmung so gering und vor allem über den Umfang verteilt gleichmäßig zu erhalten, dass runde Kolben anstelle der bisher üblichen elliptischen Kolben eingesetzt werden können.

Durch das Vorsehen von Gewindeabschnitten am Oberteil und Unterteil kann zusätzlich zur Sicherung durch den Presssitz im Bereich der Stirnfläche eine zuverlässige Befestigung des Oberteils am Unterteil erreicht werden. Aufgrund des Gewindes sind Oberteil und Unterteil vergleichsweise einfach zu montieren und das Oberteil ist in kostengünstiger Weise als Drehteil herstellbar. Die Herstellung als Gussteil oder Schmiedeteil sowie mittels Sinter- und Pulververfahren ist ebenfalls möglich.

Durch die Anordnung der Gewindeabschnitte beabstandet von den die Presspassung realisierenden Teilen wird das Oberteil zweifach im Unterteil geführt, nämlich einmal durch den an die Stirnfläche anschließenden Presssitz und durch die zueinander passenden Gewindeabschnitte. Auf diese Weise wird zuverlässig vermieden, dass das Oberteil innerhalb des Unterteils verkippt.

Durch einen Übergangsbereich zwischen Oberteil und Unterteil in dem das Oberteil und das Unterteil nicht miteinander kontaktiert sind, einen sogenannten Freistich zwischen dem scheibenartigen Abschnitt des Oberteils und dem Gewindeabschnitt des Oberteils, wird ein weiter verringerter Wärmeübergang zwischen dem Oberteil und dem Unterteil des Kolbens erreicht. Dies deshalb, da sich der Gewindeabschnitt auf diese Weise nicht bis unmittelbar an den scheibenartigen Abschnitt heran erstreckt, der die im Betrieb heiße Stirnfläche des Kolbens bildet.

In Weiterbildung der Erfindung weist das Oberteil anschließend an die Stirnfläche einen mit einer Hauptkomponente parallel zu einer Mittelachse des Kolbens umlaufenden Absatz auf, der mittels einer Presspassung mit dem Unterteil verbunden ist.

Durch diese Maßnahmen lässt sich bereits unmittelbar anschließend an die Stirnfläche ein Presssitz zwischen Oberteil und Unterteil realisieren. Trotz der Presspassung ist ein Wärmeübergang zwischen Stirnfläche und Umfangslauffläche des Kolbens gegenüber einteiligen Kolben noch deutlich verringert. Mittels eines umlaufenden Absatzes kann bei einfacher Herstellbarkeit eine zuverlässige Presspassung realisiert werden.

In Weiterbildung der Erfindung sind das Oberteil und das Unterteil im Bereich der Stirnfläche des Kolbenbodens so bemessen und weisen einen solchen Wärmeausdehnungskoeffizienten auf, dass die Presspassung auch bei der maximal zu erwartenden Betriebstemperatur aufrechterhalten wird.

Durch diese Maßnahmen wird ein sicherer Halt des Oberteils am Unterteil gewährleistet. Bei entsprechender Dimensionierung der Preßpassung kann darüber hinaus das thermische Ausdehnungsverhalten des gesamten Kolbens beeinflusst werden. Durch die Presspassung ist das Unterteil bis zu der maximal zu erwartenden Betriebstemperatur gegen das Oberteil vorgespannt. Wird als Material für das Oberteil ein Material mit geringem Wärmeausdehnungskoeffizienten gewählt, wird sich der Kolben bei Erwärmung im Betrieb deutlich weniger verformen, als dies ohne Presspassung zwischen Unterteil und Oberteil der Fall wäre. Bei entsprechender Wahl des Wärmeausdehnungskoeffizienten des Oberteils und der entsprechenden Dimensionierung des Presssitzes kann die thermische Verformung, insbesondere die üblicherweise bei Kolben auftretende exzentrische thermische Verformung, in so engen Grenzen gehalten werden, dass rund bearbeitete Kolben einsetzbar sind. Dadurch sinken die Herstellungskosten für Kolben beträchtlich. Das Oberteil kann beispielsweise aus Keramik hergestellt sein. Der Kolbenschaft beziehungsweise das Unterteil können beispielsweise aus Carbonmaterial oder Kohlefaser hergestellt sein.

In Weiterbildung der Erfindung weist das Oberteil einen scheibenartigen Abschnitt auf, der abschnittsweise die Stirnfläche des Kolbens bildet und der auf seiner, dem Unterteil zugewandten Unterseite wenigstens zwei Flächenabschnitte aufweist, die in einer Schnittebene parallel zu einer Mittellängsachse des Kolbens gesehen auf gegenüberliegenden Seiten der Mittellängsachse angeordnet sind und mit der Mittellängsachse jeweils einen Winkel von weniger als 90° einschließen und an passenden Gegenflächen des Unterteils angreifen.

Mittels solcher Flächenabschnitte kann eine weitere Verbesserung der Befestigung des Oberteils am Unterteil speziell bei hohen Betriebstemperaturen erreicht werden. Das Oberteil weist dabei vorteilhafterweise einen Wärmeausdehnungskoeffizienten auf, der kleiner oder gleich dem Wärmeausdehnungskoeffizienten des Unterteils ist. Durch den Presssitz zwischen Oberteil und Unterteil sowie gegebenenfalls durch die geringere Ausdehnung des Oberteils gegenüber dem Unterteil bei Erwärmung wird durch die beiden Flächenabschnitte eine Art Klammergriff des Oberteils am Unterteil erreicht. Vorteilhafterweise sind die beiden Flächenabschnitte symmetrisch zur Mittellängsachse angeordnet und schließen mit der Mittellängsachse einen Winkel zwischen 86° und 89°, insbesondere zwischen 88° und 89° ein.

In Weiterbildung der Erfindung ist die dem Unterteil zugewandte Unterseite des scheibenartigen Abschnitts und die Gegenfläche des Unterteils jeweils nach Art einer Kegelstumpfmantelfläche ausgebildet.

Auf diese Weise ist das Kolbenoberteil als Drehteil herstellbar und am Kolbenunterteil können die geeigneten Gegenflächen ebenfalls mittels eines Drehvorgangs ausgebildet werden.

In Weiterbildung der Erfindung weisen Oberflächen des Oberteils und/oder Oberflächen des Unterteils, die mit dem Unterteil bzw. dem Oberteil in Kontakt stehen, wenigstens teilweise eine Oberflächrauigkeit im Bereich von 1/100 mm bis 3/100 mm auf.

Durch eine solche, sogenannte Orangenhaut wird die Haftreibung zwischen Oberteil und Unterteil deutlich erhöht, so dass eine weitere Verbesserung des Halts des Oberteils am Unterteil erzielt wird. Speziell in Verbindung mit einem in das Unterteil eingeschraubten Oberteil wird dadurch eine sehr zuverlässige Verdrehsicherung zwischen Oberteil und Unterteil erzielt.

In Weiterbildung der Erfindung ist auf den Oberflächen des Oberteils und/oder den Oberflächen des Unterteils, die mit dem Unterteil bzw. dem Oberteil in Kontakt stehen, wenigstens teilweise eine Rillenstruktur zur Erzielung der Oberflächenrauigkeit ausgebildet.

Auf diese Weise kann mittels eines Drehvorgangs die gewünschte Oberflächenrauigkeit erzielt werden. Dabei ist es durchaus vorteilhaft, keine perfekt gedrehte und geglättete Rillenstruktur zu schaffen, vielmehr sind beim Drehvorgang entstehende Materialausbrüche und Unregelmäßigkeiten im Sinne einer Erhöhung der Haftreibung durchaus erwünscht.

In Weiterbildung der Erfindung ist das Oberteil mittels wenigstens einer sich am Unterteil abstützenden Druckfeder in Einschraubrichtung vorgespannt.

Auf diese Weise wird das Oberteil zusätzlich zum Presssitz am Unterteil gesichert. Selbst bei extremer Erwärmung und/oder extremen Vibrationen, die möglicherweise zu einer Lockerung des Presssitzes führen können, bleibt das Oberteil durch die Vorspannung des Gewindeabschnitts in Einschraubrichtung sicher am Unterteil befestigt.

In Weiterbildung der Erfindung sind der Gewindeabschnitt des Oberteils und der Gewindeabschnitt des Unterteils im normalen Betriebstemperaturbereich des Kolbens mittels einer Presspassung miteinander verbunden.

Dadurch wird eine zusätzliche Sicherungsmaßnahme realisiert, um das Oberteil bei allen Betriebsbedingungen sicher am Unterteil zu halten. Trotz des dann zweifachen Presssitzes zwischen Oberteil und Unterteil ist ein Wärmeübergang zwischen Kolbenboden und Kolbenhemd gegenüber einstückigen Kolben immer noch deutlich verringert.

In Weiterbildung der Erfindung ist der Gewindeabschnitt des Oberteils an einem zylindrischen Ringabschnitt ausgebildet.

In Weiterbildung der Erfindung ist der zylindrische Ringabschnitt wenigstens einmal in radialer Richtung geschlitzt und so bemessen, dass er beim Verschrauben mit dem Gewindeabschnitt des Unterteils aufgeweitet oder zusammengedrückt wird.

Auf diese Weise lässt sich eine Vorspannung der Gewindeabschnitte gegeneinander erreichen. Die Schlitze im Ringabschnitt können darüber hinaus so ausgeführt werden, beispielsweise einseitig abgeschrägt werden, dass eine zusätzliche Aufschraubsicherung entsteht, da sich die Ringabschnitte beispielsweise nach Art von Widerhaken einer Aufschraubbewegung entgegenstellen, ein Einschrauben aber mit geringem Kraftaufwand möglich ist.

In Weiterbildung der Erfindung ist das Oberteil mit wenigstens einem, der Stirnfläche des Kolbenbodens abgewandten Vorsprung versehen, auf den wenigstens eine U-artige Rastklammer aufgeschoben ist, die am Unterteil des Kolbens abgestützt ist.

Auch auf diese Weise kann zusätzlich zum Presssitz eine Sicherung des Oberteils am Unterteil in konstruktiv einfacher Weise realisiert werden. Die U-artige Rastklammer dient dabei lediglich als Verliersicherung, falls sich unter extremen Betriebsbedingungen der Presssitz zwischen Oberteil und Unterteil lösen sollte.

In Weiterbildung der Erfindung ist der Vorsprung als zylindrischer Ringabschnitt ausgebildet.

Eine solche Ausbildung ist kostengünstig als Drehteil herstellbar.

In Weiterbildung der Erfindung weist die wenigstens eine U-artige Rastklammer einen federnden Fortsatz auf, der am Unterteil unter Vorspannung anliegt.

Über eine reine Verliersicherung hinaus wird dadurch das Oberteil gegen das Unterteil vorgespannt. Auch unter extremen Betriebsbedingungen, unter denen sich möglicherweise der Presssitz zwischen Oberteil und Unterteil lockert, bleibt das Oberteil durch die Vorspannung der U-artigen Rastklammern in seiner vorgesehenen Einbaulage im Unterteil.
In Weiterbildung der Erfindung weisen das Oberteil und das Unterteil zueinander passende Teile eines Bajonettverschlusses auf.

In Weiterbildung der Erfindung weisen das Oberteil und/oder das Unterteil federnde Rasteinrichtungen, insbesondere federbelastete Kugeln oder Riegel, auf, die mit einer zur Richtung der Federbelastung der Rasteinrichtungen in einem Winkel angeordneten Führungsflächen am Unterteil bzw. am Oberteil zusammenwirken, um das Oberteil gegen das Unterteil vorzuspannen.

In Weiterbildung der Erfindung sind das Oberteil und das Unterteil mittels eines im Bereich der Mittelachse des Kolbens angeordneten Bajonettverschlusses sowie federnder Rasteinrichtungen am Umfang des Oberteils miteinander verbunden.

Auf diese Weise wird bei einfacher Montierbarkeit eine zweifache Sicherung des Oberteils am Unterteil zusätzlich zum Presssitz geschaffen.

In Weiterbildung der Erfindung ist der Bajonettverschluss mittels einer Feder in Schließrichtung vorgespannt.

In Weiterbildung der Erfindung besteht das Oberteil wenigstens im Bereich der Stirnfläche des Kolbens aus einer Titan-Aluminium-Legierung. Titan-Aluminium-Legierungen zeichnen sich durch geringes Gewicht sowie hervorragende Eigenschaften bei hohen Temperaturen aus. So weisen solche Legierungen, die auch als Gamma-Titan-Aluminid (Gamma-TiAl) bezeichnet werden, einen geringen Wärmeausdehnungskoeffizienten auf. Zusammen mit dem Presssitz wenigstens im Bereich der Stirnfläche des Kolbens zwischen Oberteil und Unterteil kann bei Verwendung von Gamma-Titan-Aluminid ein Kolben geschaffen werden, der bei Erwärmung weniger stark von seiner Ursprungsform abweicht, als dies bei konventionellen Kolben der Fall ist. Speziell wird es möglich, den Kolben eine runde Form zu geben, da die thermische Ausdehnung über den Umfang zum einen gering und zum anderen gleichmäßig erfolgt. Dadurch können erhebliche Kostenvorteile bei der Herstellung der Kolben gegenüber der konventionellen elliptischen Form, erreicht werden. Der erfindungsgemäße Kolben kann beispielsweise im sogenannten Komponentengießverfahren hergestellt werden. Dabei wird das Oberteil, das als Drehteil, als Schmiedeteil, als Gussteil durch Sinterverfahren oder Pulververfahren hergestellt sein kann, in die Gussform für das Unterteil eingelegt und beim Gießen des Unterteils mit eingegossen.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. In den Zeichnungen zeigen:
- Fig. 1: eine Ansicht von unten eines Oberteils eines erfindungsgemäßen Kolbens,
- Fig. 2: das Oberteil der Fig. 1 in Seitenansicht,
- Fig. 3: einen mit dem Oberteil der Fig. 1 versehenen erfindungsgemäßen Kolben in Schnittansicht,
- Fig. 4: eine Schnittansicht einer weiteren Ausführungsform der Erfindung,
- Fig. 5: eine vergrößerte, ausschnittsweise Schnittansicht des Kolbens der Fig. 3,
- Fig. 6: eine vergrößerte ausschnittsweise Schnittansicht eines Kolbens gemäß einer weiteren Ausführungsform der Erfindung,
- Fig. 7: eine Ansicht von unten eines Oberteils eines erfindungsgemäßen Kolbens gemäß einer weiteren Ausführungsform der Erfindung,
- Fig. 8: eine Seitenansicht des Oberteils der Fig. 7,
- Fig. 9: eine Schnittansicht eines erfindungsgemäßen Kolbens mit dem Oberteil der Fig. 7,
- Fig. 10: eine Ansicht von unten eines Oberteils eines erfindungsgemäßen Kolbens gemäß einer weiteren Ausführungsform der Erfindung,
- Fig. 11: eine Seitenansicht des Oberteils der Fig. 10, jedoch ohne Rastklammern,
- Fig. 12: eine Schnittansicht eines Unterteils eines erfindungsgemäßen Kolbens, der für die Montage des Oberteils der Fig. 10 und 11 vorgesehen ist,
- Fig. 13: einen Materialzuschnitt für die in der Fig. 12 gezeigten Rastklammern,
- Fig. 14: eine perspektivische Ansicht der Rastklammern der Fig. 12,
- Fig. 15: eine vergrößerte, ausschnittsweise Schnittansicht des Kolbens der Fig. 10 bis 12,
- Fig. 16: einen Materialzuschnitt und eine Seitenansicht einer Rastklammer für einen erfindungsgemäßen Kolben,
- Fig. 17: einen Materialzuschnitt und eine perspektivische Ansicht einer weiteren Rastklammer für einen erfindungsgemäßen Kolben,
- Fig. 18: eine abschnittsweise Schnittansicht eines Kolbens gemäß einer weiteren Ausführungsform der Erfindung,
- Fig. 19: eine abschnittsweise Schnittansicht einer weiteren Ausführungsform eines erfindungsgemäßen Kolbens und
- Fig. 20: eine abschnittsweise Schnittansicht einer weiteren Ausführungsform eines erfindungsgemäßen Kolbens,
- Fig. 21: eine Schnittansicht eines Kolbenoberteils gemäß einer weiteren Ausführungsform eines erfindungsgemäßen Kolbens und
- Fig. 22: eine Schnittansicht eines Kolbenunterteils eines erfindungsgemäßen Kolbens, das zur Montage mit dem Kolbenoberteil der Fig. 21 vorgesehen ist.

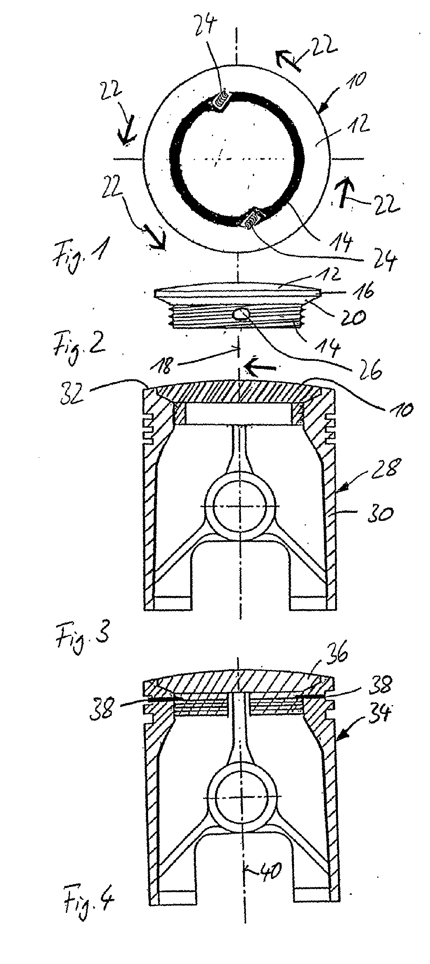

Das in einer Ansicht von unten in der Fig. 1 und in einer Seitenansicht in der Fig. 2 gezeigte Oberteil 10 für einen erfindungsgemäßen Kolben weist einen plattenartigen Abschnitt 12 und einen Gewindeabschnitt 14 auf. Der plattenartige Abschnitt 12 weist eine linsenartige Oberfläche auf, die im eingebauten Zustand eine Brennraumbegrenzung bildet. An die gewölbte, linsenartige Oberfläche schließt sich ein umlaufender Rand oder Absatz 16 an, der im wesentlichen parallel zu einer Mittelachse 18 des Kolbens ausgerichtet ist. Anschließend an den umlaufenden Absatz 16 folgt gegenüber der linsenartigen Oberfläche ein kegelstumpfförmiger Abschnitt 20, der an seinem unteren Ende in den Gewindeabschnitt 14 übergeht.

In der Fig. 1 ist eine Einschraubrichtung des Oberteils mit Pfeilen 22 gekennzeichnet. In diese Einschraubrichtung 22 wird das Oberteil mittels zweier Druckfedern 24 vorgespannt, die in passenden Bohrungen 26 im Gewindeabschnitt 14 angeordnet sind. Die Bohrungen 26 sind nur wenig gegen den Umfang des Gewindeabschnitts 14 geneigt, so dass die Federkraft der Druckfedern 24 zum großen Teil in eine in Umfangsrichtung gerichtete Vorspannkraft umgesetzt werden kann.

Die Schnittansicht der Fig. 3 zeigt einen erfindungsgemäßen Kolben 28 gemäß einer ersten Ausführungsform der Erfindung, der mit dem in den Fig. 1 und 2 gezeigten Oberteil 10 versehen ist. Das Oberteil 10 ist in ein Unterteil 30 eingeschraubt, das an einem Innenumfang einen zu dem Gewindeabschnitt 14 des Oberteils 10 passenden Gewindeabschnitt trägt.

Wie zu erkennen ist, wird eine Umfangslauffläche des Kolbens 28, entsprechend der Fläche, die beim Einbau des Kolbens 28 in einen Zylinder an diesem anliegt, vollständig durch das Unterteil 30 gebildet. Das Unterteil 30 weist auch insgesamt drei Nuten zur Anordnung von Kolbenringen auf. Das Unterteil bildet darüber hinaus einen sich ausgehend von der Umfangsfläche nach innen erstreckenden Ringabschnitt 32 einer Stirnfläche eines Kolbenbodens aus. Bis auf den Ringabschnitt 32 ist die übrige Stirnfläche des Kolbenbodens durch das Oberteil 10 gebildet.

Wie bereits ausgeführt wurde, bildet die linsenartige Oberfläche 12 einen Abschnitt der Stirnfläche des Kolbenbodens und das Oberteil 10 ist bündig in das Unterteil 30 eingepasst, so dass kein Absatz zwischen dem Ringabschnitt 32 und der linsenartigen Oberfläche 12 des Oberteils 10 entsteht. Der umlaufende Absatz 16 des Oberteils 10 ist in Gegenüberlage zu einem ebenfalls parallel zur Mittelachse 18 des Kolbens verlaufenden Absatz des Unterteils angeordnet. Zwischen dem umlaufenden Absatz 16 des Oberteils 10 und dem gegenüberliegenden Absatz des Unterteils 30 wird eine Presspassung hergestellt. Dadurch ist die Stirnfläche des Kolbenbodens auch im Bereich der Stoßstelle zwischen Unterteil 30 und Oberteil 10 abgedichtet und es sind keine Spalte vorhanden, in denen sich Ablagerungen bilden könnten oder die zu einer Beeinträchtigung der Verbrennung führen könnten. Der Presssitz zwischen Oberteil 10 und Unterteil 30 wird dadurch hergestellt, dass vor der Montage des Oberteils 10 das Unterteil 30 auf etwa 250°C erwärmt wird. Nach dem Einschrauben des Oberteils 10 und der Abkühlung des Unterteils 30 ist dann eine Presspassung zwischen Oberteil 10 und Unterteil 30 wenigstens im Bereich der Stirnfläche des Kolbens 28 realisiert. In gleicher Weise ist aber der Gewindeabschnitt 14 des Oberteils 10 und der hierzu passende Gewindeabschnitt des Unterteils 30 so bemessen, dass nach dem Abkühlen des Unterteils 30 eine Presspassung zwischen dem Gewindeabschnitt 14 und dem Unterteil 30 besteht. Zusammen mit den Druckfedern 24 ist dadurch sichergestellt, dass das Oberteil 10 auch bei extremen Betriebsbedingungen des Kolbens 28 sicher am Unterteil 30 gehalten wird.

Das Oberteil 10 ist aus einem Material mit geringen Wärmeausdehnungskoeffizienten gefertigt, beispielsweise Gamma-Titan-Aluminid. Diese Titan-Aluminum-Legierung weist neben hervorragenden Hochtemperatureigenschaften darüber hinaus ein geringes Gewicht auf. Durch die Presspassung zwischen Oberteil 10 und Unterteil 30 und den geringen Wärmeausdehnungskoeffizienten von Gamma-Titan-Aluminid kann erreicht werden, dass auch bei starker Erwärmung des Kolbens 28 dieser sich gleichmäßig in radialer Richtung ausdehnt. Infolgedessen ist es möglich, dem Kolben 28 eine kreiszylindrische Form zu geben. Dies führt gegenüber den üblicherweise gewählten elliptischen Formen konventioneller Kolben zur erheblichen Einsparungen bei der Herstellung.

Das Oberteil 10 kann als Drehteil, als Gussteil, als Schmiedeteil, durch Sinterverfahren oder auch Pulververfahren hergestellt werden.

Der Kolben 28 der Fig. 3 weist gegenüber konventionellen, einstückigen Kolben einen deutlich verringerten Wärmeübergang vom Oberteil 10 auf das Unterteil 30 auf. Trotz des Presssitzes zwischen Oberteil 10 und Unterteil 30 stellen die Anlageflächen des Oberteils 10 am Unterteil 30 einen hohen Wärmewiderstand dar, der erforderlichenfalls durch Beschichtung dieser Anlageflächen noch erhöht werden kann. Dadurch besteht eine große Temperaturdifferenz im Betrieb des Kolbens 28 zwischen dem Oberteil 10 und dem Unterteil 30. Die Umfangslauffläche des Kolbens 28 bleibt gegenüber der Stirnfläche des Kolbens dadurch erheblich kühler, so dass die Anforderungen an den Schmierfilm zwischen Umfangslauffläche des Kolbens 28 und Zylinder wesentlich geringer sind als bei konventionellen Kolben. Speziell bei Zweitaktmotoren ergibt sich dadurch der Vorteil, dass mit wesentlich verringertem Ölanteil im Gemisch gefahren werden kann, so dass zum einen die Treibstoffkosten sinken und zum anderen die Abgasqualität erheblich verbessert ist. Bei Verwendung des erfindungsgemäßen Kolbens 28 kann das Abgas eines Zweitaktmotors mit einem Katalysator nachbehandelt werden, um eine noch weitergehende Verbesserung der Abgasqualität zu erreichen.

Eine weitere Ausführungsform der Erfindung zeigt ein in der Fig. 4 in Schnittansicht dargestellter Kolben 34. Im Unterschied zur Ausführungsform der Fig. 1 bis 3 ist das Oberteil 36 zusätzlich durch Stifte 38 gesichert. Die Stifte 38 sind jeweils in einer Bohrung, die am Nutgrund einer Kolbenringnut beginnt und sich in radialer Richtung auf eine Mittelachse 40 des Kolbens 34 zu erstreckt, angeordnet. Diese Bohrung durchsetzt das Unterteil des Kolbens und den Gewindeabschnitt des Oberteils 36. Nach Einschieben des Bolzens 38 in eine solche Bohrung ist das Oberteil 36 dadurch gegen Verdrehung im Unterteil gesichert. Die Stifte 38 können gleichzeitig zur Verdrehsicherung von Kolbenringen dienen.

Die vergrößerte, abschnittsweise Schnittansicht der Fig. 5 zeigt den Kolben 28 der Fig. 3. Gut zu erkennen ist der umlaufende Rand oder Absatz 16 des Oberteils 10, der mit einer Presspassung am gegenüberliegenden Rand des Unterteils 30 anliegt. Ausgehend vom umlaufenden Rand 16 verringert sich der Durchmesser des Oberteils 10 durch den kegelstumpfförmigen Abschnitt 20 bis zum Gewindeabschnitt 14. Wie in der Fig. 5 zu erkennen ist, können Kolbenringnuten im Unterteil 30 dadurch sehr nahe an der Stirnfläche des Kolbens 28 angeordnet werden. Dennoch nimmt das Oberteil 10 den weitaus größten Teil der Stirnfläche des Kolbens 28 ein und der Ringabschnitt 32 der Stirnfläche, der durch das Unterteil 30 gebildet ist, weist nur eine geringe Fläche auf. Dadurch ist sichergestellt, dass sich das Unterteil 30 auch bei hohen Brennraumtemperaturen weniger stark erwärmt als das Oberteil 10.

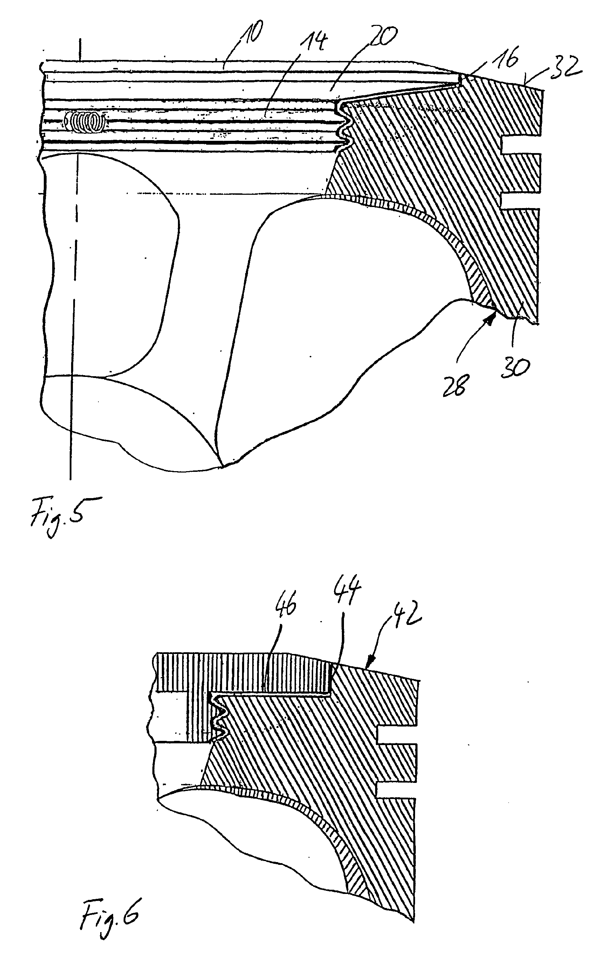

Eine weitere Ausführungsform eines erfindungsgemäßen Kolbens 42 ist in abschnittsweiser Schnittansicht in der Fig. 6 dargestellt. Im Unterschied zum Kolben 28 der Fig. 5 schließt sich hier an einen parallel zur Mittelachse des Kolbens 42 verlaufenden umlaufenden Rand 44 des Oberteils 10 eine senkrecht zur Mittelachse liegende Fläche 46 an, die sich nach innen bis zu einem Gewindeabschnitt erstreckt. Der umlaufende Absatz 44 liegt mittels einer Presspassung am gegenüberliegenden Absatz des Unterteils an. Durch die Anordnung der Fläche 46 senkrecht zur Mittelachse des Kolbens kann das Oberteil insgesamt flacher gestaltet werden. Die Fertigung des Oberteils und des Unterteils, beispielsweise jeweils als Drehteile, ist gegenüber der Ausführungsform der Fig. 5 vereinfacht.

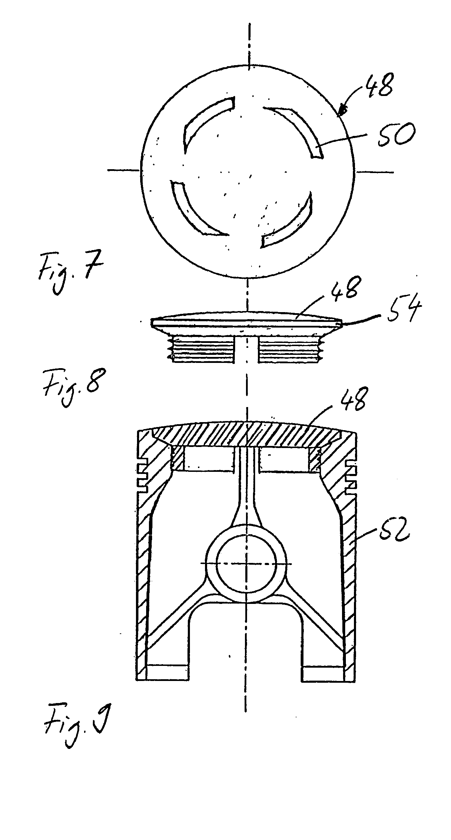

Die Darstellung der Fig. 7 zeigt eine Ansicht von unten eines Oberteils 48 für einen erfindungsgemäßen Kolben. Das Oberteil 48 weist einen in radialer Richtung geschlitzten Gewindering 50 auf. Der Gewindering 50 besteht aus insgesamt vier Abschnitten. Jeder Abschnitt des Gewinderings 50 ist einerseits durch eine in radialer Richtung verlaufende Stirnfläche abgeschlossen und andererseits durch eine schräg zum Radius verlaufende Schnittfläche. Diese schräge Stirnfläche erleichtert das Einschrauben des Gewinderings 50. Die gegenüberliegende, in radialer Richtung liegende Stirnfläche des Gewinderingabschnitts 50 sorgt für eine Aufschraubsicherung, da sie in Aufschraubrichtung für einen erhöhten Widerstand sorgt.

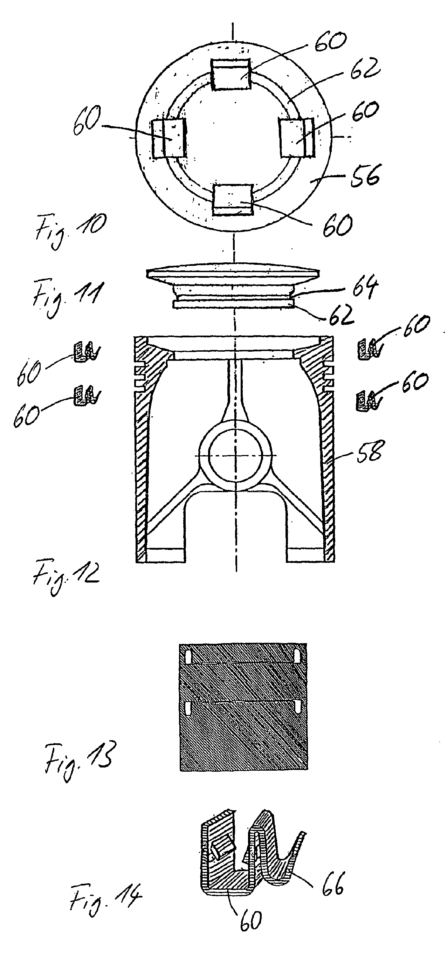

In der Seitenansicht des Oberteils 48 der Fig. 8 sowie der Schnittansicht eines mit dem Oberteil 48 versehenen Kolbens 52 der Fig. 9 ist zu erkennen, dass das Oberteil 48 unmittelbar anschließend an die Stirnfläche des Kolbens einen umlaufenden Absatz 54 trägt, der parallel zu einer Mittelachse des Kolbens ausgerichtet ist. Über diesen umlaufenden Absatz 54 und eine entsprechend, ebenfalls parallel zur Mittellängsachse ausgerichteten umlaufenden Fläche des Unterteils 52 wird eine Presspassung zwischen Oberteil 48 und Unterteil 52 erreicht.

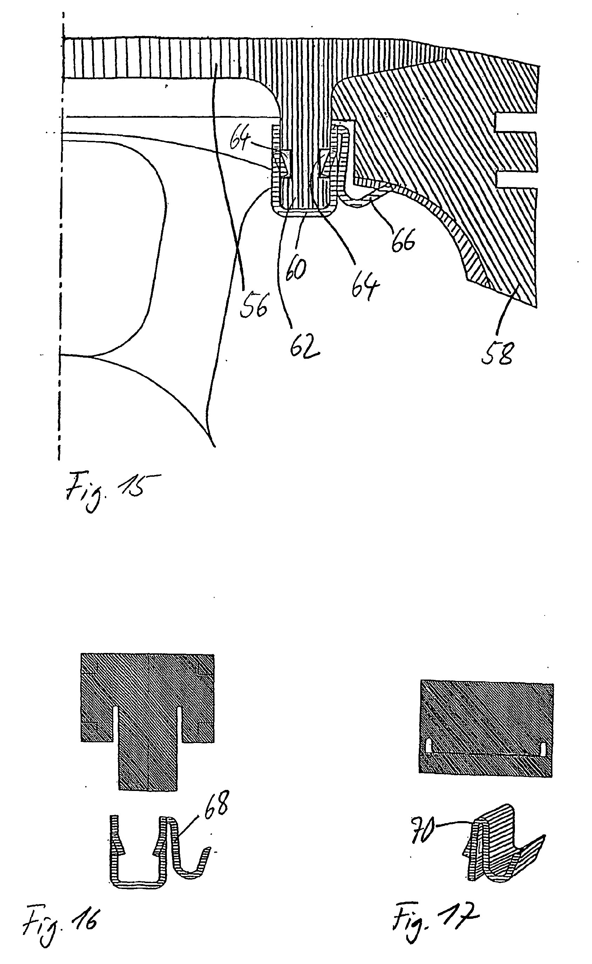

Eine weitere Ausführungsform eines erfindungsgemäßen Kolbens ist in den Fig. 10 bis 12 dargestellt. Auch hier wird ein Oberteil 56 mittels Presspassung mit einem Unterteil 58 verbunden. Zusätzlich zum Presssitz zwischen Oberteil 56 und Unterteil 58 sind zur Sicherung des Oberteils 56 insgesamt vier Rastklammern 60 vorgesehen. Die Rastklammern werden auf einen Ringabschnitt 62 des Oberteils 56 aufgeschoben, der sich auf einer, der Stirnfläche des Kolbenbodens abgewandten Seite des Oberteils 56 erstreckt. Der Ringvorsprung 62 ist an seinem Innenumfang sowie an seinem Außenumfang mit jeweils einer umlaufenden Nut 64 versehen, in die Rasthaken der Rastklammern 60 eingreifen können. Die Rastklammern 60 weisen jeweils eine U-artige Form auf, wobei Rastnasen in den Innenraum zwischen den Schenkeln der U-artigen Form vorragen. Nach Aufschieben der Rastklammern 60 auf den Ringvorsprung 62 rasten die Rastnasen in eine jeweils zugeordnete Nut 64 ein und verhindern, dass die Rastklammern 60, ohne ihre Schenkel zu spreizen, wieder vom Ringvorsprung 62 abgezogen werden können.

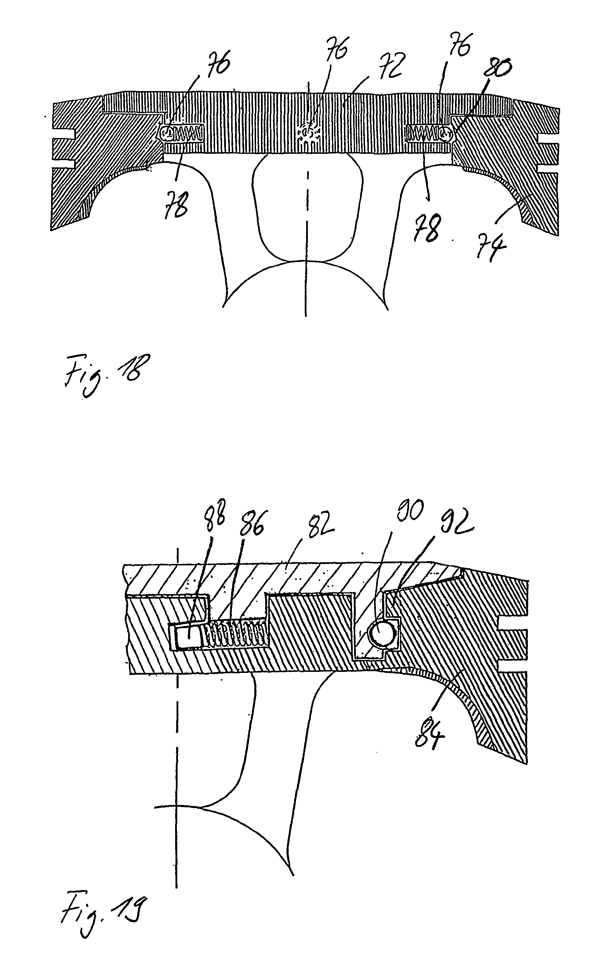

Wie der perspektivischen Ansicht der Fig. 14 zu entnehmen ist, weisen die Rastklammern 60 weiterhin einen federnden Fortsatz 66 auf, der ebenfalls U-artig gestaltet ist und vom freien Ende eines der Schenkel der U-artigen Form ausgeht. Dieser federnde Fortsatz 66 ist dafür vorgesehen, in Einbaulage des Oberteils 56 am Unterteil 58 anzuliegen und das Oberteil in seine Einbaulage im Unterteil 58 vorzuspannen. Selbst wenn sich der Presssitz zwischen Oberteil 56 und Unterteil 58 durch extreme Betriebsbedingungen lockern sollte, wird durch die federnden Fortsätze 66 das Oberteil 56 weiterhin sicher am Unterteil 58 gehalten.

In der Fig. 13 ist ein Materialzuschnitt für die Rastklammern 60 dargestellt. Es ist zu erkennen, dass die Rastklammern 60 als Standteil mit äußerst geringem Materialverschnitt gefertigt werden können.

Die abschnittsweise Schnittansicht der Fig. 15 zeigt die Einbaulage der Rastklammern 60 im montierten Zustand des Oberteils 56 am Unterteil 58. Es ist zu erkennen, dass die von jedem Schenkel der U-artigen Rastklammer ausgehenden Rastnasen in jeweils eine angrenzende Nut 64 des Ringvorsprungs 62 eingreifen. Der federnde Fortsatz 66 liegt am Unterteil 58 an, ist in der in der Fig. 15 gezeigten Einbaulage gegen das Unterteil 58 vorgespannt und zieht dadurch das Oberteil 56 in die dargestellte Einbaulage. Es ist dabei festzustellen, dass selbst bei einem Bruch des federnden Fortsatzes 66 das Oberteil 56 immer noch unverlierbar am Unterteil 58 gehalten wäre. Denn der Außenumfang des Ringvorsprungs 62 liegt bündig an einer entsprechend gestalteten Innenumfangsfläche des Unterteils 58 an. Sollte der federnde Fortsatz 66 daher brechen und beispielsweise abfallen, ließe sich das Oberteil 56 nur so weit vom Unterteil 58 entfernen, bis das freie Ende des außenliegenden Schenkels der U-artigen Rastklammer 60 am Unterteil 58 anstoßen würde.

Die Darstellung der Fig. 16 zeigt einen Materialzuschnitt und eine Seitenansicht einer weiteren einsetzbaren Rastklammer 68. Bei der Rastklammer 68 sind Rastnasen an den außenliegenden Endkanten vorgesehen. Ein federnder Fortsatz ist schmäler als die gesamte Breite der Rastklammer 68 ausgebildet.

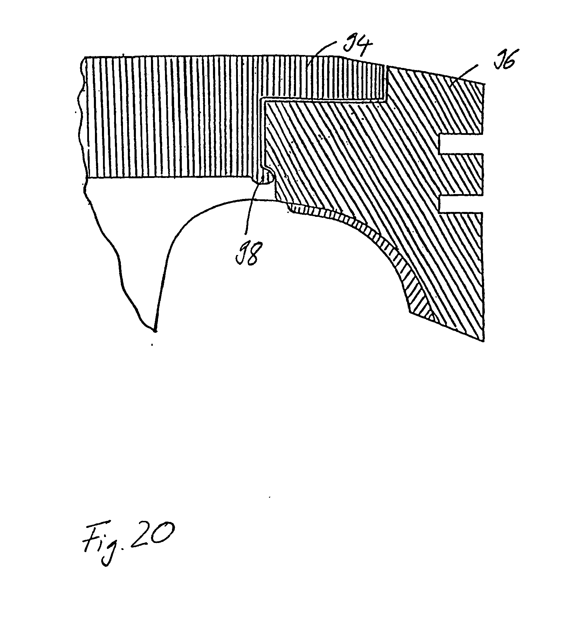

Die Fig. 17 zeigt eine weitere Rastklammer 70, die zur Sicherung eines Oberteils an einem Unterteil eines erfindungsgemäßen Kolbens eingesetzt werden kann. Die Rastklammer 17 ist vorteilhafterweise zum Einschieben in eine Nut zwischen Oberteil und Unterteil vorgesehen und könnte beispielsweise in die in der Fig. 15 erkennbare Nut zwischen dem Außenumfang des Ringvorsprungs 62 und dem Unterteil 58 eingeschoben werden. Die Rastklammer 70 ist in einfacher Weise und kostengünstig herstellbar.

Die Schnittansicht der Fig. 18 zeigt eine weitere Ausführungsform eines erfindungsgemäßen Kolbens. Ein Oberteil 72 ist an einem Unterteil 74 dadurch zusätzlich zum Presssitz gesichert, dass am Oberteil 72 insgesamt vier federbelastete Kugeln 76 vorgesehen sind, die in radialer Richtung nach außen gegen das Unterteil 74 vorgespannt sind. Die Kugeln 76 sind um einen Winkel von 90° zueinander beabstandet am Umfang des Oberteils 72 angeordnet. Jede der Kugeln 76 ist mittels einer Druckfeder 78 in radialer Richtung nach außen vorgespannt. Die Federn 78 und die Kugeln 76 sitzen jeweils in Bohrungen des Oberteils 72, die in radialer Richtung verlaufen und sich zum Außenumfang hin öffnen. Die federbelasteten Kugeln 76 können im Einbauzustand des Oberteils 72 mit einer schrägen umlaufenden Fläche 80 am Unterteil 74 zusammenwirken. Die umlaufende Fläche 80 ist so angeordnet, dass eine Verlängerung der Fläche 80 in Richtung der Stirnfläche des Kolbens gesehen einen Kegel ergeben würde, dessen Spitze auf der Mittelachse des Kolbens zu liegen kommt. Durch diese Anordnung der schrägen, umlaufenden Fläche 80 und die Vorspannung der Kugeln 76, die an der Fläche 80 anliegen, wird eine Vorspannung des Oberteils 72 in Richtung auf das Unterteil 74 erzeugt. Selbst bei Lockerung des Presssitzes zwischen Oberteil 72 und Unterteil 74 würde das Oberteil 72 dadurch sicher in der in der Fig. 18 dargestellten Einbaulage am Unterteil 74 gehalten.

Die Darstellung der Fig. 19 zeigt eine abschnittsweise Schnittansicht eines weiteren erfindungsgemäßen Kolbens. Ein Oberteil 82 wird mittels eines Bajonettverschlusses an einem Unterteil 84 gehalten. Ein erstes Sperrelement 88 des Bajonettverschlusses ist im Bereich der Mittelachse des Kolbens angeordnet und mittels einer Druckfeder 86 in Schließrichtung vorgespannt. Hiervon in radialer Richtung beabstandet sind weitere Sperrelemente 90 angeordnet. Als Sperrelemente 90 sind Kugeln vorgesehen, die halbseitig in einer halbkugelartigen Ausnehmung des Oberteils 82 gehalten sind. Am Unterteil 84 können die Kugeln in eine passende Nut eingreifen und dadurch das Oberteil 82 am Unterteil 84 sichern. Gestrichelt angedeutet ist eine etwa parallel zur Mittelachse des Kolbens verlaufende Nut 92, die das Einführen der Kugel 90 erlaubt und in die in Umfangsrichtung verlaufende Nut des Unterteils mündet, in der die Kugel 90 in Einbaulage angeordnet ist.

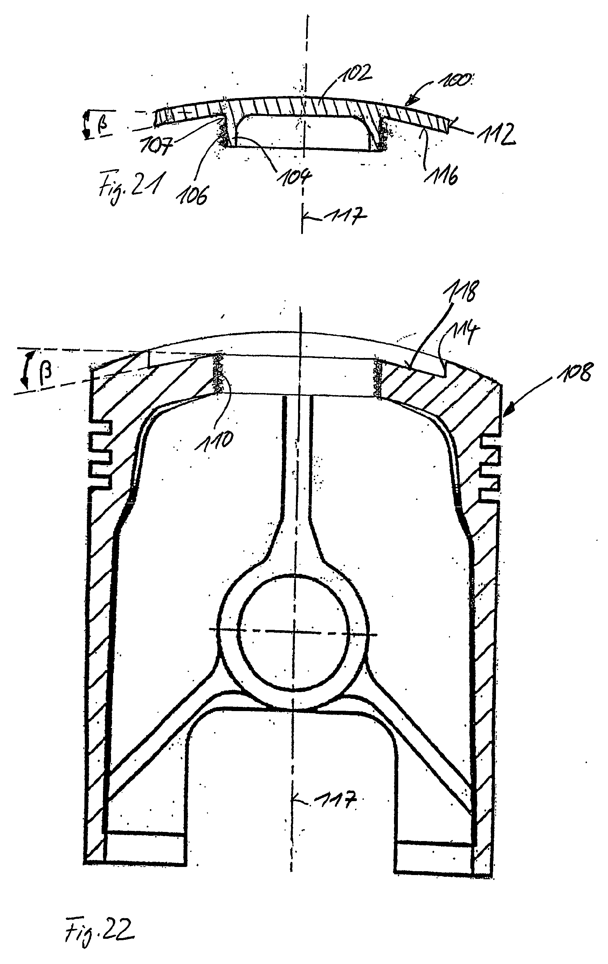

Die Darstellung der Fig. 20 zeigt eine abschnittsweise Schnittansicht eines weiteren erfindungsgemäßen Kolbens. Ein Oberteil 94 ist mittels einer Presspassung in einem Unterteil 96 gehalten. Als zusätzliche Sicherung des Oberteils 94 am Unterteil 96 ist das Oberteil auf seiner, der Stirnfläche des Kolbens abgewandten Seite mit einem Vorsprung 98 versehen, der in eine passende Ausnehmung des Unterteils 96 eingreift. Der Vorsprung 98 kann durch mechanische Verformung des Oberteils 94 ausgeformt werden, nachdem das Oberteil 94 im Unterteil 96 angeordnet ist. Der Vorsprung 98 kann aber beispielsweise auch durch Aufbringen eines Schweißpunktes angeformt werden. Zweckmäßigerweise werden über den Umfang des Oberteils 94 mehrere Vorsprünge 98 ausgeformt, die in passende Ausnehmungen im Unterteil 96 eingreifen.

Die Schnittansicht der Fig. 21 zeigt ein Oberteil 100, das einen scheibenartigen Abschnitt 102 aufweist, der eine Stirnfläche des Kolbens bildet und der eine, im eingebauten Zustand einem Brennraum zugewandte, nach außen gekrümmte Oberfläche aufweist. Gegenüberliegend der nach außen gekrümmten Oberfläche ist konzentrisch ein zylindrischer Fortsatz 104 ausgebildet, der an seiner Außenumfangsfläche einen Außengewindeabschnitt 106 trägt. Das Oberteil 100 ist aus einem hochwärmebeständigen Material mit geringem Wärmeausdehnungskoeffizienten gefertigt, beispielsweise eine Titanlegierung.

Zwischen dem Ansatz des zylindrischen Fortsatzes 104 auf der Unterseite des scheibenartigen Abschnitts 102 und dem Gewindeabschnitt 106 ist eine Umfangsfläche 107 vorgesehen, die kein Außengewinde trägt. Der Gewindeabschnitt 106 ist somit von dem Ansatz des zylindrischen Fortsatzes an dem scheibenartigen Abschnitt 102 beabstandet. Das Kolbenunterteil ist dann in einer Weise ausgebildet, so dass im Bereich dieser Umfangsfläche 107 keine Berührung zwischen dem Kolbenoberteil und dem Kolbenunterteil auftritt. Dadurch wird ein Wärmeübergang von dem scheibenartigen Abschnitt 102 auf das Kolbenunterteil weiter verringert.

Fig. 22 zeigt in einer Schnittansicht ein erfindungsgemäßes Kolbenunterteil 108, das zur Montage mit dem Kolbenoberteil 100 der Fig. 21 vorgesehen ist. Das Kolbenunterteil 108 ist hohlzylindrisch ausgebildet, wobei sich ein freier Querschnitt des Hohlzylinders zur Kolbenstirnfläche hin verringert und im oberen Abschnitt des Unterteils 108 durch den freien Querschnitt einer Gewindebohrung 110 gebildet ist. In die Gewindebohrung 110 wird das Oberteil 100 mit dem zylindrischen Fortsatz 104 eingeschraubt. Ein Presssitz zwischen dem Unterteil 108 und dem Oberteil 100 wird im montierten Zustand zwischen einer Außenumfangsfläche 112 des scheibenartigen Abschnitts 102 des Oberteils 100 und einer Innenumfangsfläche 114 des Unterteils 108 eingestellt. Die Innenumfangsfläche 114 des Unterteils 108 schließt dabei unmittelbar an eine Stirnfläche des Kolbens an. Darüber hinaus kann auch im Bereich der Gewindebohrung 110 zwischen dem Oberteil 100 und dem Unterteil 108 ein Presssitz eingestellt werden.

Zusätzlich zu dem Presssitz zwischen Oberteil 100 und Unterteil 108 wird ein zuverlässiger Halt zwischen Oberteil 100 und Unterteil 108 durch die spezielle, in der Fig. 21 gut zu erkennende, pilzartige Formgebung des Oberteils 100 erreicht. Der scheibenartige Abschnitt 102 weist auf seiner Unterseite, die dem Kolbenunterteil 108 zugewandt ist, eine kegelstumpfmantelförmige Oberfläche 116 auf, die um einen Winkel β zur Horizontalen geneigt ist. Der Winkel β beträgt vorteilhafterweise etwa 1° bis 2°, so dass die Kegelstumpfmantelfläche 116 mit einer Mittellängsachse 117 des Oberteils 100 einen Winkel zwischen 88° und 89° einschließt.

In gleicher Weise sind die Kontaktbereiche am Kolbenunterteil 108 ausgebildet, so dass eine kegelstumpfmantelförmige Gegenfläche 118 anschließend an die Umfangsfläche 114 ausgebildet ist. Auch die Gegenfläche 118 ist um einen Winkel β von etwa 1° bis 2° zur Horizontalen geneigt und schließt mit der Mittellängsachse 117 einen Winkel zwischen 88° und 89° ein. Ein Presssitz zwischen Oberteil 100 und Unterteil 108 wird nun so eingestellt, dass die Fläche 116 gegen die Gegenfläche 118 vorgespannt ist. Wie aus den Fig. 21 und 22 zu erkennen ist, ergibt sich dadurch eine Art Klammergriff des Oberteils 100 am Unterteil 108, das für einen sicheren Halt sorgt.

Zur Verbesserung des Halts des Oberteils 100 am Unterteil 108 können die Fläche 116 und die Gegenfläche 118 mit einer zuvor bestimmten Oberflächenrauigkeit versehen sein. Eine solche, sogenannte Orangenhaut kann beispielsweise beim Ausdrehen des Kolbenunterteils 108 bzw. beim Drehen des Kolbenoberteils 100 hergestellt werden. Eine bevorzugte Oberflächenrauigkeit liegt dabei im Bereich zwischen 1/100 mm und 2/100 mm, wobei diese gewünschte Oberflächenrauigkeit beispielsweise durch eine Rillenstruktur erreicht werden kann.

Bei Erwärmung des Kolbenunterteils 108 und des Kolbenoberteils 100 kann dann, wenn ein Wärmeausdehnungskoeffizient des Kolbenoberteils 100 kleiner ist als ein Wärmeausdehnungskoeffizient des Kolbenunterteils 108, dieser Klammergriff zwischen Oberteil 100 und Unterteil 108 noch verstärkt werden.

Das Oberteil 100 kann zusätzlich durch Verstemmen, beispielsweise durch Körnerschläge, die vom Innenraum des Unterteils 108 her angebracht werden, am Unterteil 108 gesichert werden.

## Patentansprüche

1. Mehrteiliger Kolben, insbesondere für Verbrennungskraftmaschinen, mit einem Unterteil (30, 52, 58, 74, 84, 96, 108) und einem Oberteil (10, 36, 48, 56, 72, 82, 94, 100), wobei das Unterteil ein Kolbenhemd mit einer Umfangslauffläche sowie einen sich vom Umfang aus nach innen erstreckenden Ringabschnitt (32) einer Stirnfläche eines Kolbenbodens bildet und wobei das Oberteil (10, 36, 48, 56, 72, 82, 94, 100) die übrige Stirnfläche des Kolbenbodens bildet, wobei das Oberteil (10, 36, 48, 56, 72, 82, 94, 100) wenigstens im Bereich der Stirnfläche des Kolbenbodens mittels einer Presspassung mit dem Unterteil (30, 52, 58, 74, 84, 96, 108) verbunden ist und das Unterteil (30, 52, 58, 74, 84, 96, 108) hohlzylindrisch ausgebildet ist, **dadurch gekennzeichnet, dass** das Oberteil (10, 100) und das Unterteil (30, 108) zueinander passende Gewindeabschnitte (14, 106, 110) im Abstand von den die Presspassung realisierenden Abschnitten (16, 112, 114) tragen und miteinander verschraubt sind, wobei das Oberteil (10, 100) einen scheibenartigen Abschnitt (102) aufweist, der abschnittsweise die Stirnfläche des Kolbens bildet, und der Gewindeabschnitt (106) des Oberteils (100) an einem zylindrischen, von dem scheibenartigen Abschnitt (102) ausgehenden Fortsatz (104) ausgebildet ist, wobei der Gewindeabschnitt (106) vom Übergang des Fortsatzes (104) in den scheibenartigen Abschnitt (102) beabstandet ist und wobei das Unterteil (108) das Oberteil (102) im Bereich zwischen dem Übergang und dem Gewindeabschnitt (106) nicht kontaktiert.

2. Mehrteiliger Kolben nach Anspruch 1, **dadurch gekennzeichnet, dass** das Oberteil (10, 36, 48, 56, 72, 82, 94, 100) anschließend an die Stirnfläche einen mit einer Hauptkomponente parallel zu einer Mittelachse (40, 117) des Kolbens umlaufenden Absatz (16, 44, 54, 112) aufweist, der mittels einer Presspassung mit dem Unterteil (30, 52, 58, 74, 84, 96, 108) verbunden ist.

3. Mehrteiliger Kolben nach Anspruch 1 oder 2, **dadurch gekennzeichnet, dass** das Oberteil (10, 36, 48, 56, 72, 82, 94, 100) und das Unterteil (30, 52, 58, 74, 84, 96, 108) im Bereich der Stirnfläche des Kolbenbodens so bemessen sind und einen solchen Wärmeausdehnungskoeffizienten aufweisen, dass die Presspassung auch bei der maximal zu erwartenden Betriebstemperatur aufrechterhalten wird.

4. Mehrteiliger Kolben nach Anspruch 1, **dadurch gekennzeichnet, dass** das Oberteil (100) einen scheibenartigen Abschnitt (102) aufweist, der abschnittsweise die Stirnfläche des Kolbens bildet und der auf seiner, dem Unterteil (108) zugewandten Unterseite wenigstens zwei Flächenabschnitte (116) aufweist, die in einer Schnittebene parallel zu einer Mittellängsachse (117) des Kolbens gesehen, an gegenüberliegenden Seiten der Mittellängsachse (117) angeordnet sind und mit der Mittellängsachse (117) jeweils einen Winkel von weniger als 90° einschließen und an passenden Gegenflächen (118) des Unterteils (108) angreifen.

5. Mehrteiliger Kolben nach Anspruch 4, **dadurch gekennzeichnet, dass** die dem Unterteil (108) zugewandten Flächenabschnitte (116) des scheibenartigen Abschnitts (102) und die Gegenflächen (118) des Unterteils (108) jeweils nach Art einer Kegelstumpfmantelfläche (116) ausgebildet sind.

6. Mehrteiliger Kolben nach einem der vorstehenden Ansprüche, **dadurch gekennzeichnet, dass** Oberflächen (116) des Oberteils (100) und/oder Oberflächen (118) des Unterteils (108), die mit dem Unterteil (108) bzw. dem Oberteil (100) in Kontakt stehen, wenigstens teilweise eine Oberflächenrauigkeit im Bereich von 1/100 mm bis 3/100 mm aufweisen.

7. Mehrteiliger Kolben nach Anspruch 6, **dadurch gekennzeichnet, dass** auf den Oberflächen (116) des Oberteils (100) und/oder den Oberflächen (118) des Unterteils (108), die mit dem Oberteil (100) bzw. dem Unterteil (108) in Kontakt stehen, wenigstens teilweise eine Rillenstruktur zur Erzielung der Oberflächenrauigkeit ausgebildet ist.

8. Mehrteiliger Kolben nach einem der Ansprüche 1 bis 7, **dadurch gekennzeichnet, dass** das Oberteil (10) mittels wenigstens einer sich am Unterteil (30) abstützenden Druckfeder (24) in Einschraubrichtung (22) vorgespannt ist.

9. Mehrteiliger Kolben nach einem der Ansprüche 1 bis 8, **dadurch gekennzeichnet, dass** der Gewindeabschnitt (14, 50, 106) des Oberteils (10, 48, 100) und der Gewindeabschnitt des Unterteils (30, 52, 108) im normalen Betriebstemperaturbereich des Kolbens (28) mittels einer Presspassung miteinander verbunden sind.

10. Mehrteiliger Kolben nach einem der Ansprüche 1 bis 9, **dadurch gekennzeichnet, dass** der Gewindeabschnitt (14, 50, 106) des Oberteils (10, 48, 100) an einem zylindrischen Ringabschnitt (104) ausgebildet ist.

11. Mehrteiliger Kolben nach Anspruch 10, **dadurch gekennzeichnet, dass** der zylindrische Ringabschnitt (50) wenigstens einmal in radialer Richtung geschlitzt und so bemessen ist, dass er beim Verschrauben mit dem Gewindeabschnitt des Unterteils (58) aufgeweitet oder zusammengedrückt wird.

12. Mehrteiliger Kolben nach einem der vorstehenden Ansprüche, **dadurch gekennzeichnet, dass** das Oberteil (56) mit wenigstens einem, der Stirnfläche des Kolbenbodens abgewandten Vorsprung (64) versehen ist, auf den wenigstens eine U-artige Rastklammer (60, 68, 70) aufgeschoben ist, die am Unterteil (58) des Kolbens abgestützt ist.

13. Mehrteiliger Kolben nach Anspruch 12, **dadurch gekennzeichnet, dass** der Vorsprung (64) als zylindrischer Ringabschnitt ausgebildet ist.

14. Mehrteiliger Kolben nach Anspruch 13, **dadurch gekennzeichnet, dass** die wenigstens eine U-artige Rastklammer (60) einen federnden Fortsatz (66) aufweist, der am Unterteil (58) unter Vorspannung anliegt.

15. Mehrteiliger Kolben nach einem der vorstehenden Ansprüche, **dadurch gekennzeichnet, dass** das Oberteil (82) und das Unterteil (84) zueinander passende Teile eines Bajonettverschlusses aufweisen.

16. Mehrteiliger Kolben nach einem der vorstehenden Ansprüche, **dadurch gekennzeichnet, dass** das Oberteil (72, 82) und/oder das Unterteil (74, 84) federnde Rasteinrichtungen (76, 78, 86, 88), insbesondere federbelastete Kugeln (76) oder Riegel (88, 90), aufweisen, die mit einer zur Richtung der Federbelastung der Rasteinrichtungen in einem Winkel angeordneten Führungsflächen (80, 90) am Unterteil (74, 84) beziehungsweise am Oberteil zusammenwirken, um das Oberteil gegen das Unterteil vorzuspannen.

17. Mehrteiliger Kolben nach einem der vorstehenden Ansprüche, **dadurch gekennzeichnet, dass** das Oberteil (82) und das Unterteil (84) mittels eines im Bereich der Mittelachse des Kolbens angeordneten Bajonettverschlusses (86, 88) und federnden Rasteinrichtungen (90) am Umfang des Oberteils (82) miteinander verbunden sind.

18. Mehrteiliger Kolben nach Anspruch 17, **dadurch gekennzeichnet, dass** der Bajonettverschluss (86, 88) mittels einer Feder (86) in Schließrichtung vorgespannt ist.

19. Mehrteiliger Kolben nach einem der vorstehenden Ansprüche, **dadurch gekennzeichnet, dass** das Oberteil (10, 36, 48, 56, 72, 82, 94, 100) wenigstens im Bereich der Stirnfläche des Kolbens aus einer Titan-Aluminium-Legierung besteht.

## Claims

1. Multi-part piston, in particular for combustion engines, having a lower part (30, 52, 58, 74, 84, 96, 108) and an upper part (10, 36, 48, 56, 72, 82, 94, 100), where the lower part forms a piston skirt with a peripheral bearing surface and a ring section (32) extending inwards from the periphery of an end face of a piston crown and where the upper part (10, 36, 48, 56, 72, 82, 94, 100) forms the remaining end face of the piston crown, where the upper part (10, 36, 48, 56, 72, 82, 94, 100) is connected to the lower part (30, 52, 58, 74, 84, 96, 108) at least in the area of the end face of the piston crown by means of a press fit and the lower part (30, 52, 58, 74, 84, 96, 108) is designed hollow-cylindrical, **characterized in that** the upper part (10, 100) and the lower part (30, 108) have matching threaded sections (14, 106,110) at a distance from those sections (16, 112, 114) achieving the press fit and are screwed to one another, where the upper part (10, 100) has a disk-like section (102) that in some sections forms the end face of the piston, and the threaded section (106) of the upper part (100) is provided on a cylindrical extension (104) extending from the disk-like section (102), where the threaded section (106) is at a distance from the transition of the extension (104) into the disk-like section (102) and where the lower part (108) does not contact the upper part (102) in the area between the transition and the threaded section (106).

2. Multi-part piston according to Claim 1, **characterized in that** the upper part (10, 36, 48, 56, 72, 82, 94, 100) has adjoining the end face an all-round shoulder (16, 44, 54, 112) running with a main component parallel to a central axis (40, 117) of the piston and connected to the lower part (30, 52, 58, 74, 84, 96, 108) by means of a press fit.

3. Multi-part piston according to Claim 1 or 2, **characterized in that** the upper part (10, 36, 48, 56, 72, 82, 94, 100) and the lower part (30, 52, 58, 74, 84, 96, 108) are so dimensioned in the area of the end face of the piston crown and have a thermal expansion coefficient such that the press fit is maintained even at the maximum operating temperature to be expected.

4. Multi-part piston according to Claim 1, **characterized in that** the upper part (100) has a disk-like section (102) that in some sections forms the end face of the piston and that on its underside facing the lower part (108) has at least two surface sections (116) that are arranged on opposite sides of a central longitudinal axis (117) of the piston when viewed in a section plane parallel to the central longitudinal axis (117) and describe with the central longitudinal axis (117) an angle of less than 90° and act on suitable mating surfaces (118) of the lower part (108).

5. Multi-part piston according to Claim 4, **characterized in that** the surface sections (116) of the disk-like section (102) that face the lower part (108) and the mating surfaces (118) of the lower part (108) are each designed in the manner of a frustum-shaped circumferential surface (116).

6. Multi-part piston according to one of the preceding claims, **characterized in that** surfaces (116) of the upper part (100) and/or the surfaces (118) of the lower part (108) that are in contact with the lower part (108) and the upper part (100) respectively have at least partially a surface roughness in the range from 1/100 mm to 3/100 mm.

7. Multi-part piston according to Claim 6, **characterized in that** a groove structure is at least partially provided to achieve the surface roughness on the surfaces (116) of the upper part (100) and/or the surfaces (118) of the lower part (108) that are in contact with the lower part (108) and the upper part (100) respectively.

8. Multi-part piston according to one of Claims 1 to 7, **characterized in that** the upper part (10) is pretensioned in the screw-in direction (22) by at least one compression spring (24) resting on the lower part (30).

9. Multi-part piston according to one of Claims 1 to 8, **characterized in that** the threaded section (14, 50, 106) of the upper part (10, 48, 100) and the threaded section of the lower part (30, 52, 108) are connected to one another in the normal operating temperature range of the piston (28) by means of a press fit.

10. Multi-part piston according to one of Claims 1 to 9, **characterized in that** the threaded section (14, 50, 106) of the upper part (10, 48, 100) is provided on a cylindrical ring section (104).

11. Multi-part piston according to Claim 10, **characterized in that** the cylindrical ring section (50) is split at least once in the radial direction and is so dimensioned that it is widened or compressed when screwed to the threaded section of the lower part (58).

12. Multi-part piston according to one of the preceding claims, **characterized in that** the upper part (56) is provided with at least one projection (64) facing away from the end face of the piston crown and onto which projection is slid at least one U-shaped engaging clip (60, 68, 70) that rests on the lower part (58) of the piston.

13. Multi-part piston according to Claim 12, **characterized in that** the projection (64) is designed as a cylindrical ring section.

14. Multi-part piston according to Claim 13, **characterized in that** the at least one U-shaped engaging clip (60) has a springy extension (66) in pretensioned contact with the lower part (58).

15. Multi-part piston according to one of the preceding claims, **characterized in that** the upper part (82) and the lower part (84) have matching parts of a bayonet fitting.

16. Multi-part piston according to one of the preceding claims, **characterized in that** the upper part (72, 82) and/or the lower part (74, 84) have flexible engaging devices (76, 78, 86, 88), in particular spring-loaded balls (76) or catches (88, 90) interacting with a guide surface (80, 90) arranged at an angle to the direction of the spring loading of the engaging devices on the lower part (74, 84) or on the upper part respectively, in order to pretension the upper part against the lower part.

17. Multi-part piston according to one of the preceding claims, **characterized in that** the upper part (82) and the lower part (84) are connected to one another by means of a bayonet fitting (86, 88) arranged in the area of the central axis of the piston and by flexible engaging devices (90) on the periphery of the upper part (82).

18. Multi-part piston according to Claim 17, **characterized in that** the bayonet lock (86, 88) is pretensioned in the closing direction by means of a spring (86).

19. Multi-part piston according to one of the preceding claims, **characterized in that** the upper part (10, 36, 48, 56, 72, 82, 94, 100) comprises a titanium-aluminium alloy at least in the area of the end face of the piston.

## Revendications

1. Piston constitué de plusieurs parties, en particulier pour machines à combustion interne, avec une partie inférieure (30, 52, 58, 74, 84, 96, 108) et une partie supérieure (10, 36, 48, 56, 72, 82, 94, 100), sachant que la partie inférieure forme une chemise de piston avec une portée périphérique ainsi qu'une partie annulaire (32) d'une face frontale d'un fond de piston, ladite partie s'étendant vers l'intérieur, et que la partie supérieure (10, 36, 48, 56, 72, 82, 94, 100) forme le reste de la face frontale du fond de piston, sachant qu'au moins dans la zone de la face frontale du fond de piston, la partie supérieure (10, 36, 48, 56, 72, 82, 94, 100) est reliée à la partie inférieure (30, 52, 58, 74, 84, 96, 108) par un ajustement serré, et que la partie inférieure (30, 52, 58, 74, 84, 96, 108) est cylindrique et creuse, **caractérisé en ce que** la partie supérieure (10, 100) et la partie inférieure (30, 108) comportent des parties filetées concordantes (14, 106, 110) à une certaine distance des parties (16, 112, 114) réalisant l'ajustement serré et sont vissées l'une dans l'autre, sachant que la partie supérieure (10, 100) présente une partie en forme de disque (102) qui forme partiellement la face frontale du piston et que la partie filetée (106) de la partie supérieure (100) est formée sur un prolongement cylindrique (104) partant de la partie en forme de disque (102), sachant que la partie filetée (106) est située à une certaine distance du cavet du prolongement (104) dans la partie en forme de disque (102), et que la partie inférieure (108) n'entre pas en contact avec la partie supérieure (102) dans la zone entre le cavet et la partie filetée (106).

2. Piston constitué de plusieurs parties selon la revendication 1, **caractérisé en ce que** la partie supérieure (10, 36, 48, 56, 72, 82, 94, 100) présente un épaulement (16, 44, 54, 112) périphérique adjacent à la surface frontale, avec un composant principal parallèle à un axe médian (40, 117) du piston, et qui est relié à la partie inférieure (30, 52, 58, 74, 84, 96, 108) par un ajustement serré.

3. Piston constitué de plusieurs parties selon la revendication 1 ou 2, **caractérisé en ce que**, dans la zone de la face frontale du fond de piston, la partie supérieure (10, 36, 48, 56, 72, 82, 94, 100) et la partie inférieure (30, 52, 58, 74, 84, 96, 108) présentent des dimensions et des coefficients de dilatation thermique tels que l'ajustement serré est maintenu même sous la température de service maximale escomptée.

4. Piston constitué de plusieurs parties selon la revendication 1, **caractérisé en ce que** la partie supérieure (100) présente une partie en forme de disque (102) qui forme partiellement la face frontale du piston et qui, sur sa face inférieure orientée vers la partie inférieure (108), présente au moins deux sections de surface (116) qui, vues dans un plan sécant parallèle à un axe médian longitudinal (117) du piston, sont situées sur des côtés opposés par rapport à l'axe médian longitudinal (117), incluent respectivement avec l'axe médian longitudinal (117) un angle inférieur à 90° et s'appuient sur des surfaces antagonistes ajustées (118) de la partie inférieure (108).

5. Piston constitué de plusieurs parties selon la revendication 4, **caractérisé en ce que** les sections de surface (116) de la partie en forme de disque (102) orientées vers la partie inférieure (108) et les surfaces antagonistes (118) de la partie inférieure (108) ont respectivement la forme d'une enveloppe de tronc de cône (116).

6. Piston constitué de plusieurs parties selon l'une des revendications précédentes, **caractérisé en ce que** les surfaces (116) de la partie supérieure (100) et/ou les surfaces (118) de la partie inférieure (108) qui sont en contact avec la partie inférieure (108) ou la partie supérieure (100) présentent au moins partiellement une rugosité superficielle comprise entre 1/100 mm et 3/100 mm.

7. Piston constitué de plusieurs parties selon la revendication 6, **caractérisé en ce que**, pour obtenir la rugosité superficielle, une structure striée est formée au moins partiellement sur les surfaces (116) de la partie supérieure (100) et/ou sur les surfaces (118) de la partie inférieure (108) qui sont en contact avec la partie supérieure (100) ou avec la partie inférieure (108).

8. Piston constitué de plusieurs parties selon l'une des revendications 1 à 7, **caractérisé en ce que** la partie supérieure (10) est soumise à une contrainte initiale dans le sens de vissage (22) par au moins un ressort de pression (24) prenant appui sur la partie inférieure (30).

9. Piston constitué de plusieurs parties selon l'une des revendications 1 à 8, **caractérisé en ce que** la partie filetée (14, 50, 106) de la partie supérieure (10, 48, 100) et la partie filetée de la partie inférieure (30, 52, 108) sont reliées entre elles par un ajustement serré dans la plage normale de température du piston (28).

10. Piston constitué de plusieurs parties selon l'une des revendications 1 à 9, **caractérisé en ce que** la partie filetée (14, 50, 106) de la partie supérieure (10, 48, 100) est formée sur une partie annulaire cylindrique (104).

11. Piston constitué de plusieurs parties selon la revendication 10, **caractérisé en ce que** la partie annulaire cylindrique (50) est fendue au moins une fois dans le sens radial et dimensionnée de manière telle qu'elle est élargie ou compressée lors du vissage avec la partie filetée de la partie inférieure (58).

12. Piston constitué de plusieurs parties selon l'une des revendications précédentes, **caractérisé en ce que** la partie supérieure (56) présente du côté opposé à la face frontale du piston au moins un encorbellement (64) dans lequel est inséré au moins un crampon (60, 68, 70) en forme de U qui s'appuie sur la partie inférieure (58) du piston.

13. Piston constitué de plusieurs parties selon la revendication 12, **caractérisé en ce que** l'encorbellement (64) est formée comme partie annulaire cylindrique.

14. Piston constitué de plusieurs parties selon la revendication 13, **caractérisé en ce que** le crampon en forme de U (60), au moins au nombre d'un, présente un prolongement élastique (66) qui s'appuie sur la partie inférieure (58) sous une contrainte initiale.

15. Piston constitué de plusieurs parties selon l'une des revendications précédentes, **caractérisé en ce que** la partie supérieure (82) et la partie inférieure (84) présentent des pièces d'un emboîtement à baïonnette ajustées entre elles.

16. Piston constitué de plusieurs parties selon l'une des revendications précédentes, **caractérisé en ce que** la partie supérieure (72, 82) et/ou la partie inférieure (74, 84) présentent des dispositifs de crantage élastiques (76, 78, 86, 88), en particulier des billes (76) ou des tiges (88, 90) commandées par ressort, qui, avec l'une des surfaces de guidage (80, 90) situées sous un certain angle dans le sens de la contrainte élastique des dispositifs de crantage, agissent conjointement sur la partie inférieure (74, 84) et la partie supérieure afin de presser la partie supérieure contre la partie inférieure.

17. Piston constitué de plusieurs parties selon l'une des revendications précédentes, **caractérisé en ce que** la partie supérieure (82) et la partie inférieure (84) sont reliées entre elles par un emboîtement à baïonnette (86, 88) situé dans la zone de l'axe médian du piston et par des dispositifs de crantage élastiques (90) sur la circonférence de la partie supérieure (82).

18. Piston constitué de plusieurs parties selon la revendication 17, **caractérisé en ce que** l'emboîtement à baïonnette (86, 88) est soumis à une contrainte initiale dans le sens de fermeture au moyen d'un ressort (86).

19. Piston constitué de plusieurs parties selon l'une des revendications précédentes, **caractérisé en ce que** la partie supérieure (10, 36, 48, 56, 72, 82, 94, 100) est constituée d'une alliage de titane et d'aluminium au moins dans la zone de la face frontale du piston.
